# DEMANDE DE BREVET EUROPEEN

(11) **EP 1 045 086 A1**
(43) Date de publication de la demande: **18.10.2000**
(21) Numéro de dépôt: 00410037.6
(22) Date de dépôt: 12.04.2000
(51) Int. Cl.: E04F 19/04, B29C 41/20, B29C 70/84, B29C 65/00

(54) **Procédé de construction d'un élément préfabriqué à base de carrelages**

(30) Priorité: 16.04.1999 FR 9904996
(71) Demandeur: Höganas Céramiques France, 38110 Rochetoirin (FR)
(72) Inventeur: Lundhal, Bo, 38110 Rochetoirin (FR)
(74) Mandataire: Hecké, Gérard

(57) **Abrégé**

Procédé de construction d'un élément préfabriqué à base de carrelages, caractérisé en ce que :
- on positionne les carrelages 16 à l'envers sur un moule 10, la face 20 antérieure des carrelages 16 étant cachée et posée directement sur au moins une surface d'appui 12, 14 du moule 10,
- on ménage des interstices 18 répartis régulièrement entre les carrelages 16 dont les faces d'accrochage 22 postérieures constituent une surface modulaire discontinue sur le moule 10,
- on remplit les interstices 18 du côté des faces d'accrochage 22 au moyen d'un mortier 24 à base de résine polymérisable pour réaliser le jointoiement des carrelages 16,
- on chauffe l'ensemble pour accélérer le durcissement et obtenir une structure monobloc rigide, le mortier 24 étant choisi pour que le coefficient d'adhérence du matériau céramique des carrelages soit supérieur à la résistance de traction de la céramique.

Après démoulage, on obtient un élément préfabriqué servant à la fois de paroi de moulage du côté des faces d'accrochage 22, et de façade de parement étanche, anticorrosion et antiacide du côté des faces antérieures 20.

## Description

### Domaine technique de l'invention

L'invention est relative à un procédé de construction d'un élément préfabriqué à base de carrelages.

L'élément préfabriqué peut être utilisé pour construire des banquettes, murets ou plinthes de protection mécanique ou anticorrosion, disposés à la base d'une cloison isolante ou vitrée, notamment dans des locaux de l'industrie alimentaire.

Il est également possible d'utiliser les éléments préfabriqués pour la fabrication de panneaux isolants, par exemple à base de mousse ou de polyuréthane, ou de murs dont le noyau est constitué par des agglomérés en béton ou des éléments en béton cellulaire.

### Etat de la technique

La méthode traditionnelle pour la construction d'une banquette ou d'un mur consiste à former d'abord une structure portante en béton, briques, moellons ou agglomérés, laquelle est ensuite recouverte d'un parement de finition à base de carrelages ou de pierres.

Dans le cas d'une structure en béton, il faut utiliser un coffrage spécial pour la coulée du béton, et attendre la prise complète du béton avant d'enlever le coffrage. Le carrelage est ensuite appliqué sur la face verticale du béton après enduction d'une couche de mortier ou de colle. On procède finalement à la phase de jointoiement qui s'opère verticalement. L'ensemble de ces opérations est réalisé sur le site selon des méthodes artisanales.

### Objet de l'invention

L'objet de l'invention consiste à élaborer un procédé de construction d'un élément préfabriqué à base de carrelages, facilitant la mise en oeuvre et la finition d'ouvrages de maçonnerie.

Le procédé selon l'invention est caractérisé en ce que :
- on positionne les carrelages à l'envers sur un moule, la face antérieure des carrelages étant cachée et posée directement sur au moins une surface d'appui du moule,
- on ménage des interstices répartis régulièrement entre les carrelages dont les faces d'accrochage postérieures constituent une surface modulaire discontinue sur le moule,
- on remplit les interstices du côté des faces d'accrochage au moyen d'un mortier à base de résine polymérisable pour réaliser le jointoiement des carrelages,
- on chauffe l'ensemble pour accélérer le durcissement et obtenir une structure monobloc rigide, le mortier étant choisi pour que le coefficient d'adhérence au matériau céramique des carrelages soit de l'ordre de 7 Mpa pour être supérieur à la résistance de traction de la céramique, et que le retrait du mortier au cours de la polymérisation soit inférieur à 0,02 %,
- et on démoule ladite structure monobloc pour obtenir ledit élément préfabriqué servant à la fois de paroi de moulage du côté des faces d'accrochage, et de façade de parement étanche, antiacide et anticorrosion du côté des faces antérieures.

La résine du mortier est une résine époxyde mélangée avec un agent durcisseur et des charges.

Un tel procédé inverse le processus de construction classique cité dans l'art antérieur, et propose d'utiliser l'élément préfabriqué en carrelages, d'une part comme une moule servant à la coulée d'une masse de remplissage à l'arrière, notamment du béton ou toute autre matière à base de mousse ou de résine, et d'autre part comme un parement étanche et anti-acide à l'avant. La mise en oeuvre des éléments préfabriqués peut être avantageusement réalisée en usine. La livraison des éléments peut être opérée soit en une seule pièce avec un ou deux carrelages en moins pour définir un trou servant au remplissage du béton, soit en deux pièces distinctes adaptables.

Chaque élément préfabriqué en carrelage peut être associé à une armature métallique pour le positionnement stable de l'ensemble sur le lit de béton.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- les figures 1 à 3 montrent les différentes étapes de construction de l'élément préfabriqué positionné sur un moule ;
- la figure 4 représente une vue en perspective d'un élément préfabriqué en carrelage pour une banquette de protection rectiligne ;
- la figure 5 est une vue identique de la figure 4 pour une banquette en coin intérieur ;
- la figure 6 est une vue identique de la figure 4 pour une banquette en coin extérieur ;
- la figure 7 est une variante de réalisation de la figure 4.

### Description du procédé

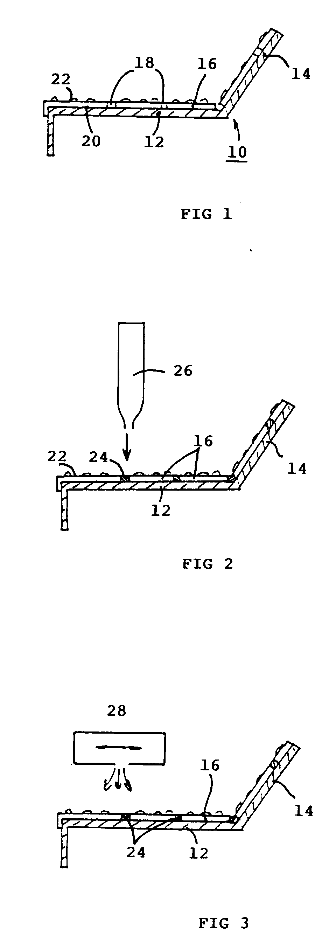

Sur les figures 1 à 3, le procédé de construction d'un élément fabriqué en carrelage fait usage d'un moule 10 composé au moins d'une première surface de support 12 raccordée à une deuxième surface 14 de support oblique. La forme et l'inclinaison des deux parties de support 12, 14 du moule 10 dépendent de la structure souhaitée de l'élément préfabriqué de maçonnerie, lequel peut être constitué par un panneau, une banquette, un muret, une plinthe, etc...Les carrelages 16 sont formés par des carreaux en céramique, grès, etc...

Dans une première phase de pose illustrée à la figure 1, on positionne les carrelages 16 à l'envers sur les deux parties de support 12, 14 en ménageant des interstices 18 de séparation servant à la formation des joints. La face 20 antérieure des carrelages 16 est cachée, et est posée directement sur la surface des deux parties de support 12, 14. La face d'accrochage 22 postérieure des carrelages 16 avec le futur mur de béton ou de mortier, est visible de manière à former sur le moule 10 une surface modulaire discontinue suite à la présence des interstices 18.

Au cours de la deuxième phase de jointoiement montrée à la figure 2, on remplit les interstices 18 au moyen d'un mortier 24 bicomposant à base de résine époxyde mélangée avec un agent durcisseur et des charges. Le jointoiement du mortier 24 dans les interstices 18 s'effectue au pistolet 26, mais il est aussi possible d'opérer le remplissage à la raclette, ou par tout autre moyen. Le mortier 24 possède une excellente résistance à tous les produits chimiques et de nettoyage utilisés notamment dans l'industrie alimentaire. Après durcissement, le coefficient d'adhérence du mortier 24 à la céramique des carrelages est de l'ordre de 7 Mpa, c'est à dire supérieur à la résistance à la traction de la céramique. Le retrait au cours de la polymérisation du mortier 24 est négligeable, inférieur à 0,02%, et notamment de l'ordre de 0,01 %.

Au cours de la troisième phase finale de durcissement représentée à la figure 3, un appareil de chauffage 28, formé par un générateur d'air chaud, des résistances ou des lampes à rayonnement du type infrarouge, peut être déplacé en regard des faces d'accrochage 22 des carrelages 16 pour accélérer la polymérisation du mortier 24. Lorsque le durcissement du mortier 24 est terminé, le jointoiement assure l'interconnexion mécanique des carrelages 16 de manière à former une structure monobloc rigide.

Il suffit ensuite de démonter la structure monobloc du moule 10 en laissant apparaître les faces 20 antérieures des carrelages 16 parfaitement propres.

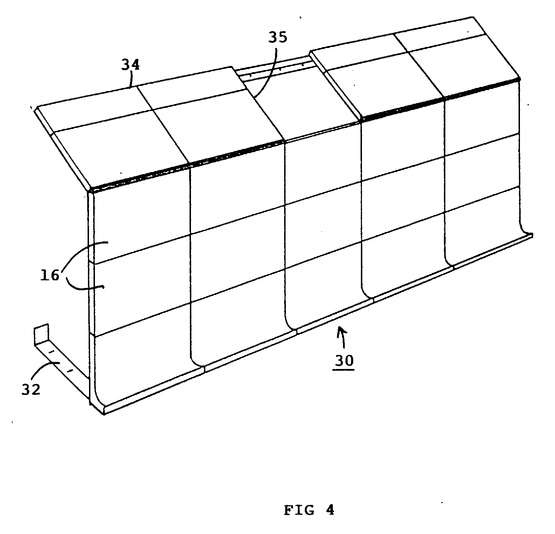

La figure 4 montre la structure monobloc démoulée, constituant l'élément préfabriqué 30 de la figure 3, et servant à la fois de paroi de moulage, et de façade de parement antiacide et anticorrosion pour la fabrication d'un muret de maçonnerie. Une armature 32 métallique peut être associée à l'élément préfabriqué 30 pour autoriser son positionnement stable sur un lit de béton réglé à un niveau de base prédéterminé.

L'élément préfabriqué 30 peut être livré avec un carrelage 16 en moins sur la partie oblique supérieure 34 pour laisser un trou 35 central, servant d'orifice de remplissage lors de la coulée du béton à l'arrière de l'élément 30.

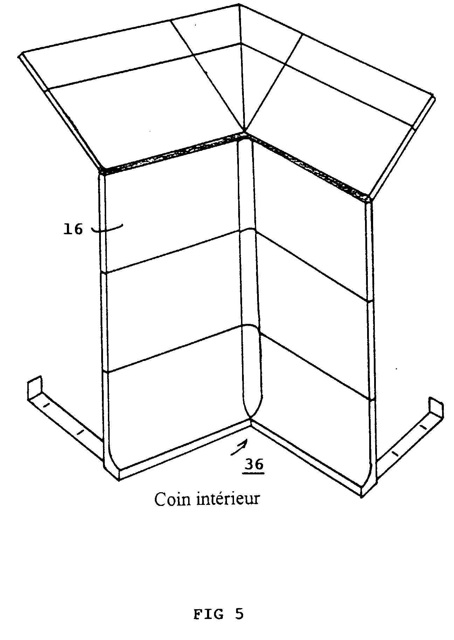

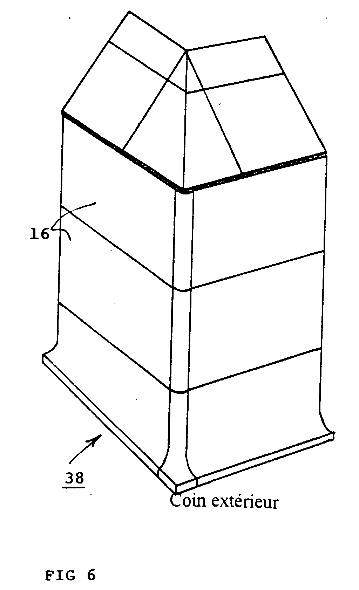

Les figures 5 et 6 montrent deux autres structures en deux parties de l'élément préfabriqué, l'une 36 en forme de coin intérieur, et l'autre 38 en forme de coin extérieur.

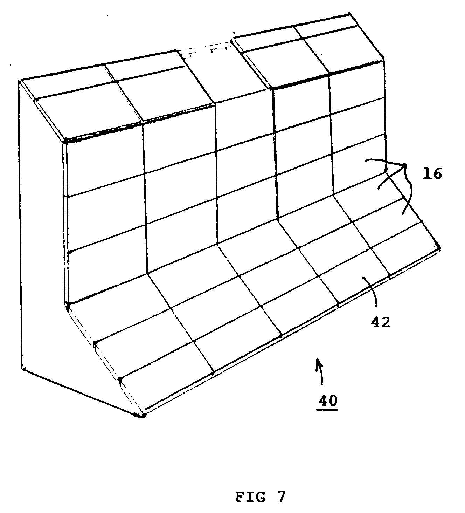

La figure 7 montre une autre structure préfabriquée de banquette 40 ayant une plinthe 42 inclinée à 45°.

L'armature 32 métallique comporte à titre d'exemple deux pattes d'appui en tôle galvanisée, fixées à la base de la structure de l'élément préfabriqué 30, 36, 38, 40.

L'armature 32 peut être vissée à l'élément préfabriqué. Le transport des éléments préfabriqués s'effectue par empilage après avoir démonté au préalable les pattes d'appui de l'armature 32.

L'armature 32 métallique peut aussi être une pièce de renforcement de l'ouvrage. Dans ce cas, elle est mise en place avant l'adaptation de l'élément préfabriqué 30, 36, 38.

Lorsque l'élément préfabriqué 30, 36, 38, 40 est installé sur le site, et après séchage du lit de béton de base, il suffit de remplir avec du béton frais la partie verticale à l'arrière de l'élément préfabriqué. La partie supérieure en pente de l'élément peut être remplie par la suite avec un mortier compact après la prise du béton dans la partie verticale.

Si une armature est nécessaire pour assurer la solidité du muret, celle-ci est mise en place avant le positionnement de l'élément préfabriqué.

Le carreau manquant est finalement posé pour boucher le trou 35 à la partie supérieure.

L'élément préfabriqué 30, 36, 38, 40 en carrelage peut avoir diverses formes, et est utilisé à la fois comme moule pour couler le béton de constitution du mur, et comme paroi de parement en carrelages.

Il est clair que le béton à base de ciment peut être remplacé par tout autre matière de remplissage, notamment isolante à base de mousse ou de résine.

## Revendications

1. Procédé de construction d'un élément préfabriqué à base de carrelages, caractérisé en ce que :
- on positionne les carrelages (16) à l'envers sur un moule (10), la face antérieure (20) des carrelages (16) étant cachée et posée directement sur au moins une surface d'appui (12, 14) du moule (10),
- on ménage des interstices (18) répartis régulièrement entre les carrelages (16) dont les faces d'accrochage (22) postérieures constituent une surface modulaire discontinue sur le moule (10),
- on remplit les interstices (18) du côté des faces d'accrochage (22) au moyen d'un mortier (24) à base de résine polymérisable pour réaliser le jointoiement des carrelages (16),
- on chauffe l'ensemble pour accélérer le durcissement et obtenir une structure monobloc rigide, le mortier (24) étant choisi pour que le coefficient d'adhérence au matériau céramique des carrelages soit de l'ordre de 7 Mpa pour être supérieur à la résistance de traction de la céramique, et que le retrait du mortier (24) au cours de la polymérisation soit inférieur à 0,02 %,
- et on démoule ladite structure monobloc pour obtenir ledit élément préfabriqué servant à la fois de paroi de moulage du côté des faces d'accrochage (22), et de façade de parement étanche, antiacide et anticorrosion du côté des faces antérieures (20).

2. Procédé de construction d'un élément préfabriqué selon la revendication 1, caractérisé en ce que la résine du mortier (24) est une résine époxyde mélangée avec un agent durcisseur et des charges.

3. Procédé de construction d'un élément préfabriqué selon l'une quelconque des revendications 1 ou 2, caractérisé en ce que le jointoiement du mortier (24) dans les interstices (18) est effectué au pistolet ou à la spatule.

4. Procédé de construction d'un élément préfabriqué selon l'une quelconque des revendications 1 à 3, caractérisé en ce que le moule (10) comporte une première surface de support (12) raccordée à une deuxième surface de support (14) oblique, l'angle d'inclinaison étant fonction de la structure de maçonnerie souhaitée.

5. Elément préfabriqué à base de carrelages en céramique obtenu selon le procédé de l'une quelconque des revendications 1 à 4.

6. Elément préfabriqué selon la revendication 5, caractérisé en ce qu'il comporte une armature 32 métallique pour le positionnement stable de l'ensemble sur le lit de béton.

7. Elément préfabriqué selon la revendication 5 ou 6, caractérisé en ce que la partie oblique supérieure est dépourvue au moins d'un carreau pour laisser un trou servant d'orifice de remplissage lors de la coulée du noyau du mur à l'arrière de l'élément préfabriqué.

8. Mur obtenu avec des éléments préfabriqués selon l'une des revendications 5 à 7.

9. Mur selon la revendication 8, caractérisé en ce que le noyau du mur peut être constitué soit par une matière isolante, notamment à base de mousse ou de résine, soit par du béton à base de ciment, ou de béton cellulaire.
